# DEMANDE DE BREVET EUROPEEN

(11) **EP 2 186 676 A1**
(43) Date de publication de la demande: **19.05.2010**
(21) Numéro de dépôt: 09290823.5
(22) Date de dépôt: 27.10.2009
(51) Int. Cl.: B60N 2/58

(54) **Composant de garnissage de véhicule automobile**

(30) Priorité: 31.10.2008 FR 0806092
(71) Demandeur: Centre d'etude et de recherche pour l'automobile (CERA), 51100 Reims (FR)
(72) Inventeur: Bonfils, Xavier, 51100 Reims (FR)
(74) Mandataire: Sayettat, Julien Christian

(57) **Abrégé**

L'invention concerne un composant (1) de garnissage de véhicule automobile comprenant, disposés l'un sur l'autre : une première couche (2) de matériau de rembourrage élastiquement compressible, ladite première couche présentant un état non comprimé où sa face d'endroit (3) forme au moins une arête (4) vive avec sa tranche (5), une deuxième couche (6) de matériau de finition élastiquement compressible qui s'étend le long et de part et d'autre de ladite arête, un revêtement (7) recouvrant ladite deuxième couche, ledit composant comprenant en outre un moyen d'assemblage (11) agencé pour plaquer ledit revêtement à l'aplomb de ladite arête en la comprimant afin de faire passer ladite première couche de son état non comprimé à un état comprimé.

## Description

L'invention concerne un composant de garnissage de véhicule automobile, par exemple un appui-tête, un accoudoir ou un siège.

II est connu de réaliser un composant de garnissage de véhicule automobile comprenant une couche de matériau élastiquement compressible de rembourrage, sa face d'endroit étant recouverte d'un revêtement tendu s'étendant de part et d'autre de ladite arête.

La couche de rembourrage peut, notamment lorsqu'elle est à base de mousse - par exemple de polyuréthanne - être réalisée par moulage, ce qui permet de lui donner une forme optimisée, notamment en prévoyant une zone incurvée entre sa face d'endroit et sa tranche conduisant à optimiser l'esthétique du composant fini.

Pour des raisons d'économie, il peut être souhaité d'utiliser une couche de rembourrage à base de « mousse refendue », c'est à dire une mousse se présentant sous la forme d'une plaque issue de découpe d'un bloc de grandes dimensions, ce qui permet de s'affranchir des moules utilisés lors d'un moulage.

En variante, la première couche peut être à base de feutre découpé ou de tout autre matériau analogue.

Dans ces cas d'une couche de rembourrage obtenue par découpe, la face d'endroit de ladite couche forme au moins une arête vive avec sa tranche, ladite arête définissant notamment un angle de 90° environ.

La présence d'une telle arête, en lieu et place d'une zone incurvée telle qu'on peut l'obtenir par moulage, conduit, après mise en place du revêtement tendu, à un composant d'esthétique disgracieuse au niveau de ladite arête, le revêtement formant une cassure créant une ligne de lumière préjudiciable à son aspect.

La cassure sus évoquée ne se présente certes pas sous la forme d'une arête vive, ceci en raison de la compression opérée par le revêtement tendu sur l'arête, mais reste néanmoins visible au travers du revêtement ce qui crée l'apparition de la ligne de lumière inesthétique.

L'invention a pour but de pallier cet inconvénient.

A cet effet, l'invention propose un composant de garnissage de véhicule automobile comprenant, disposés l'un sur l'autre :
- une première couche de matériau de rembourrage élastiquement compressible, ladite première couche présentant un état non comprimé où sa face d'endroit forme au moins une arête vive avec sa tranche,
- une deuxième couche de matériau de finition élastiquement compressible qui s'étend le long et de part et d'autre de ladite arête,
- un revêtement recouvrant ladite deuxième couche,
ledit composant comprenant en outre un moyen d'assemblage agencé pour plaquer ledit revêtement à l'aplomb de ladite arête en la comprimant afin de faire passer ladite première couche de son état non comprimé à un état comprimé.

Dans cette description, les termes de positionnement dans l'espace (haut, bas, supérieur, inférieur, longitudinal, transversal, latéral, avant, arrière, vertical, horizontal, ...) sont pris en référence au composant disposé dans le véhicule.

L'agencement proposé permet, du fait de la présence de la deuxième couche, de réaliser une répartition de la pression exercée par le revêtement sur l'arête.

II en résulte un arrondissement de la bande de revêtement au niveau de l'arête, et donc une esthétique optimisée du composant.

En outre, du fait de son caractère compressible, la deuxième couche ne nuit pas au confort apporté par le composant.

D'autres particularités et avantages de l'invention apparaîtront dans la description qui suit, faite en référence aux figures jointes dans lesquelles :

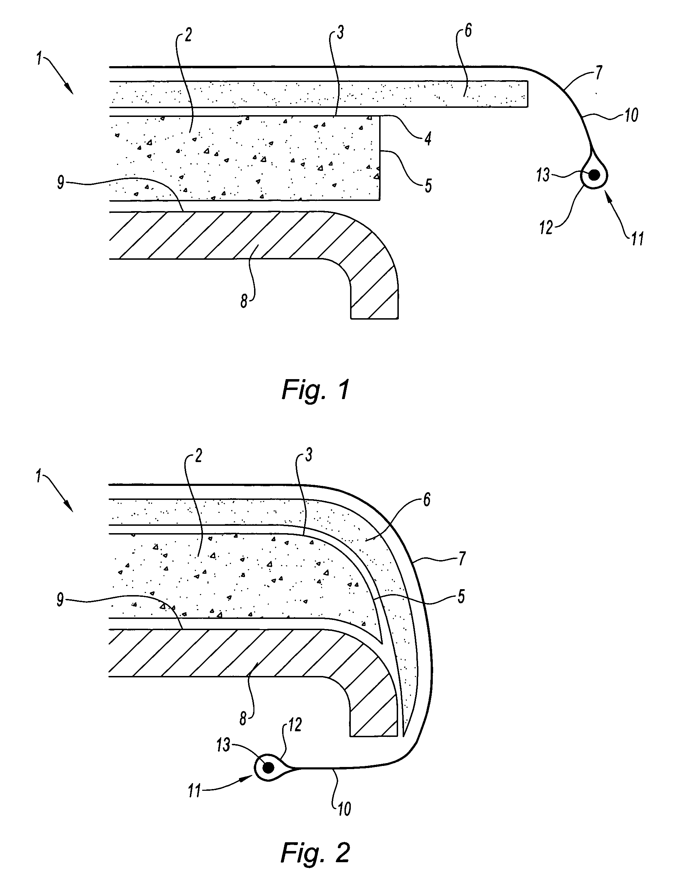

- la figure 1 est une vue schématique en coupe partielle d'un composant selon une réalisation, la première couche étant à l'état non comprimé,
- la figure 2 est une vue analogue à la figure 1, la première couche étant à l'état comprimé suite à activation du moyen d'assemblage.

En référence aux figures, on décrit un composant 1 de garnissage de véhicule automobile comprenant, disposés l'un sur l'autre :
- une première couche 2 de matériau de rembourrage élastiquement compressible, ladite première couche présentant un état non comprimé où sa face d'endroit 3 forme au moins une arête 4 vive avec sa tranche 5, ladite arête définissant notamment un angle de 90° environ,
- une deuxième couche 6 de matériau de finition élastiquement compressible qui s'étend le long et de part et d'autre de ladite arête,
- un revêtement 7 recouvrant ladite deuxième couche,
ledit composant comprenant en outre un moyen d'assemblage 11 agencé pour plaquer ledit revêtement à l'aplomb de ladite arête en la comprimant afin de faire passer ladite première couche de son état non comprimé à un état comprimé.

Selon une réalisation, la première couche 2 est à base de mousse découpée - notamment sous forme de flocons de mousse recyclée agglomérés - ou de feutre découpé, ce qui conduit notamment à réaliser au moins une arête 4 vive définissant un angle de 90° environ.

Selon une réalisation, la deuxième couche 6 est à base de mousse découpée ou de feutre découpé.

Selon la réalisation représentée, la deuxième couche 6 présente une épaisseur moindre que celle de la première couche, ladite épaisseur pouvant notamment être de l'ordre de 2 mm.

En effet, la fonction de la deuxième couche 6 étant de répartir, au niveau de l'arête 4, la pression exercée par le revêtement 7, une épaisseur faible de ladite deuxième couche est suffisante pour remplir cette fonction.

Selon la réalisation représentée, le composant 1 comprend en outre une structure d'appui 8 présentant une face d'appui 9 recouverte par la première couche 2.

Selon la réalisation représentée, lorsque la première couche 2 est dans son état comprimé :
- ladite première couche s'étend sur toute la face d'appui 9 de la structure 8,
- la deuxième couche 6 s'étend sur toute face d'endroit 3 et toute la tranche 5 périphérique de ladite première couche,
- le revêtement 7 s'étend sur toute la deuxième couche 6 et comprend une lisière 10 périphérique repliée à l'opposé de ladite face d'appui.

Selon la réalisation représentée, le moyen d'assemblage 11 comprend un conduit 12, ici sous forme de surjet ou d'ourlet, prévu en bordure de la lisière 10, dans lequel passe un lacet 13 coulissant, ledit lacet étant refermé en boucle tendue.

En variante non représentée, le moyen d'assemblage 11 comprend une pluralité d'agrafes plantées dans la lisière 10 et dans la structure 8 à l'opposé de sa face d'appui 9.

En variante non représentée, le moyen d'assemblage 11 pourrait comprendre une pluralité de picots issus de la structure 8 plantés dans le revêtement 7.

Selon une réalisation non représentée, la structure d'appui 8 est sous forme d'une palette en matière plastique moulée, ladite structure étant emboîtée sur une armature métallique en forme de U renversé, les branches du U étant saillantes de ladite structure afin de pouvoir être insérées en coulissement dans des manchons solidaires d'un haut de dossier de siège de véhicule automobile, de sorte que ledit composant forme appui-tête dudit siège.

En variantes non représentées, la structure d'appui 8 peut prendre la forme d'une grille ou de toute autre structure susceptible de comprendre une face d'appui 9.

## Revendications

1. Composant (1) de garnissage de véhicule automobile comprenant, disposés l'un sur l'autre :
• une première couche (2) de matériau de rembourrage élastiquement compressible, ladite première couche présentant un état non comprimé où sa face d'endroit (3) forme au moins une arête (4) vive avec sa tranche (5),
• une deuxième couche (6) de matériau de finition élastiquement compressible qui s'étend le long et de part et d'autre de ladite arête,
• un revêtement (7) recouvrant ladite deuxième couche,
ledit composant comprenant en outre un moyen d'assemblage (11) agencé pour plaquer ledit revêtement à l'aplomb de ladite arête en la comprimant afin de faire passer ladite première couche de son état non comprimé à un état comprimé.

2. Composant selon la revendication 1, **caractérisé en ce que** la première couche (2) est à base de mousse découpée ou de feutre découpé.

3. Composant selon la revendication 1 ou 2, **caractérisé en ce que** la deuxième couche (6) est à base de mousse découpée ou de feutre découpé.

4. Composant selon l'une quelconque des revendications 1 à 3, **caractérisé en ce que** la deuxième couche (6) présente une épaisseur moindre que celle de la première couche (2).

5. Composant selon l'une quelconque des revendications 1 à 4, **caractérisé en ce qu'**il comprend en outre une structure d'appui (8) présentant une face d'appui (9) recouverte par la première couche (2).

6. Composant selon la revendication 5, **caractérisé en ce que,** lorsque la première couche (2) est dans son état comprimé :
• ladite première couche s'étend sur toute la face d'appui (9) de la structure (8),
• la deuxième couche (6) s'étend sur toute face d'endroit (3) et toute la tranche (5) périphérique de ladite première couche,
• le revêtement (7) s'étend sur toute la deuxième couche (6) et comprend une lisière (10) périphérique repliée à l'opposé de ladite face d'appui.

7. Composant selon la revendication 6, **caractérisé en ce que** le moyen d'assemblage (11) comprend un conduit (12), prévu en bordure de la lisière (10), dans lequel passe un lacet (13) coulissant, ledit lacet étant refermé en boucle tendue.

8. Composant selon la revendication 6, **caractérisé en ce que** le moyen d'assemblage (11) comprend une pluralité d'agrafes plantées dans la lisière (10) et dans la structure (8) à l'opposé de sa face d'appui (9).

9. Composant selon l'une quelconque des revendications 5 à 8, **caractérisé en ce que** la structure d'appui (8) est sous forme d'une palette en matière plastique moulée, ladite structure étant emboîtée sur une armature métallique en forme de U renversé, les branches du U étant saillantes de ladite structure afin de pouvoir être insérées en coulissement dans des manchons solidaires d'un haut de dossier de siège de véhicule automobile, de sorte que ledit composant forme appui-tête dudit siège.
